# EUROPÄISCHE PATENTSCHRIFT

(11) **EP 1 471 469 B1**
(45) Veröffentlichungstag und Bekanntmachung des Hinweises auf die Patenterteilung: **20.09.2006**
(21) Anmeldenummer: 04001420.1
(22) Anmeldetag: 23.01.2004
(51) Int. Cl.: G07D 3/00, G07F 1/02, G07F 1/04

(54) **Vorrichtung zur Annahme von Münzen**
Apparatus for accepting coins
Méthode et dispositif pour l'acceptation de pièces de monnaie

(30) Priorität: 15.04.2003 DE 10317397
(43) Veröffentlichungstag der Anmeldung: 27.10.2004
(73) Patentinhaber: Scheidt & Bachmann GmbH, D-41238 Mönchengladbach (DE)
(72) Erfinder: Miller, Norbert, Dr., 41063 Mönchengladbach (DE); Höffges, Peter, 41176 Mönchengladbach (DE)
(74) Vertreter: Stenger, Watzke & Ring

(56) Entgegenhaltungen:
- EP-A- 0 481 699
- EP-A- 0 865 005
- EP-A- 0 940 777
- US-A- 3 621 854
- US-A- 6 042 471

## Beschreibung

Die vorliegende Erfindung betrifft ein Verfahren zur Annahme von Münzen sowie eine Vorrichtung zur Ausführung des Verfahrens.

Im Wirtschaftsverkehr ist eine Vielzahl von Zahlungssystemen, insbesondere Automaten, bekannt, mit denen ein Kunden Waren und/oder Dienstleistungen gegen Bezahlung durch Geld, Wertmarken und dergleichen erwerben kann. Der Automat nimmt das Zahlungsmittel entgegen, prüft dessen Wert und Gültigkeit und führt ein für gültig befundenes Zahlungsmittel einem Speicher zu, in dem dieses Zahlungsmittel gespeichert wird. Derartige Zahlungssysteme werden vielfach auch zum Verkauf von Fahrscheinen beispielsweise für Personenbeförderungsmittel und dergleichen eingesetzt.

Bekannte Zahlungssysteme, wie beispielsweise ein Verkaufsautomat zum Verkauf von Fahrscheinen für ein öffentliches Verkehrsmittel, weisen üblicherweise eine Öffnung auf, in die Zahlungsmittel einzeln seriell eingebbar sind. Die einzelnen Zahlungsmittel wie Münzen oder dergleichen werden geprüft und in einem Zwischenspeicher gehalten, bis der Betrag der eingegebenen Zahlungsmittel dem Betrag des Fahrscheins entspricht oder diesen übersteigt. Die Eingabe der Zahlungsmittel erfordert in der Regel einen entsprechend hohen Zeitaufwand, da nach jeder einzelnen Eingabe die Eingabeöffnung zur Eingabe weiterer Zahlungsmittel gesperrt ist, bis eine Verifikation des entsprechend eingegebenen Zahlungsmittels abgeschlossen und dieses für gültig befunden wurde. Die Einzeleingabe von Münzen ist zudem für den Kunden unhandlich, da die Münzen einzeln jeweils in einer vorgegebenen, der Öffnung der Eingabeeinheit entsprechenden Position dieser zugeführt werden müssen. Eine Einhandbedienung ist für den Kunden in der Regel nicht möglich und birgt die Gefahr, wenn sie denn doch einhändig ausgeführt wird, daß der Kunde Münzen aus einer Hand verliert und diese verloren gehen. Der Bedienungsaufwand aus Sicht des Kunden ist daher hoch und unkomfortabel. Hinzu kommt, daß häufig vorgebbare Zeitgrenzen für den Zahlungsvorgang definiert sind, so daß der Zahlungsvorgang bei Überschreitung des Zeitlimits abgebrochen wird und vom Kunden neu gestartet werden muß.

Auch eine Verkaufsstelle in einem öffentlichen Verkehrsmittel ist in der Regel mit diesen Nachteilen verbunden. Ein Fahrscheinverkauf bei einem Fahrer des öffentlichen Verkehrsmittels sieht in der Regel vor, daß der Kunde sein Fahrgeld dem Fahrer direkt übergibt bzw. dieses auf eine entsprechend dafür vorgesehene Fläche ablegt. Es ist nunmehr die Aufgabe des Fahrers, dieses Geld in seine Cashbox einzusortieren und den Betrag zu bestimmen. Dieses Verfahren birgt auch aus Sicht des Fahrers Nachteile, da die Vielzahl der äußeren Einwirkungen dazu führen kann, daß er unkonzentriert ist und bei der Abrechnung Fehler vorkommen.

EP 481699 offenbart ein Verfahren und eine Anordnung zur Annahme und Vereinzelung von Münzen in einem Spielautomaten. Die Münzen werden über ein Transportband einem Walzenpaar zugeführt, bei dem eine Walze ein Umlenkrolle des Transportbandes ist und eine zweite, oben liegende Walze Münzen zurück auf das Transportband befördert.

Es ist daher die Aufgabe der vorliegenden Erfindung, ein gattungsgemäßes Verfahren und eine Vorrichtung derart weiterzubilden, daß unter Beibehaltung eines hohen Sicherheitsstandes eine kundenfreundliche Vereinfachung erreichbar ist.

Als **Lösung** wird mit der Erfindung ein Verfahren zur Annahme von Münzen bei automatischen Zahlungstransaktionen vorgeschlagen, wobei die Münzen zur Vereinzelung über eine schiefe Ebene wenigstens einem gleichläufigen Walzenpaar zugeführt werden. Vorteilhaft wird eine an einer Walze anliegende Münze in eine zwischen den Walzen vorgesehene Öffnung hineingezogen, während die gegenüberliegende Walze eine an ihr anliegende Münze aus dem Öffnungsbereich herausbefördert. So kann eine Vereinzelung der Münzen, die den Spalt zwischen den beiden Walzen passieren, erreicht werden. Eine umständliche Bedienung durch Einführen einzelner Münzen in einen entsprechend dafür vorgesehenen Öffnungsschlitz kann vermieden werden. Darüber hinaus kann erreicht werden, daß die Eingabe und die Authentifizierung der Münzen beschleunigt wird. Insgesamt kann eine Beschleunigung des Zahlungsvorgangs erreicht werden. Die Münzen werden über ein Transportmittel, in Form einer schiefen Ebene, einem Walzenpaar zugeführt, wobei beide Walzen gleichläufig rotierbar sind, so daß eine Walze eine an ihr anliegende Münze in eine zwischen den Walzen vorgesehene Öffnung hineinzieht, während die gegenüberliegende Walze eine an ihr anliegende Münze aus dem Öffnungsbereich herausbefördert. Das Aufgabemittel kann beispielsweise als Endtrichter ausgebildet sein oder auch als eine schräge Auflagefläche, auf der die Münzen in Richtung Walzenpaar aufgrund ihres Gewichts rutschen. Es kann jedoch auch vorgesehen sein, daß die Münzen über ein Förderband zum Transportmittel befördert werden, von dem sie dann zum Walzenpaar gelangen. Der Bereich des Transportmittels ist dabei vorteilhaft so groß ausgestaltet, daß er zur Aufnahme der größtmöglichen Münzenzahl vorgesehen ist. Die Walzen können mit gleicher Drehzahl und auch mit unterschiedlicher Drehzahl rotieren. Darüber hinaus können die Walzen unterschiedliche Durchmesser und Oberflächeneigenschaften aufweisen, die beispielsweise an die vorgesehene Funktion des in den Schlitz Hineinziehens bzw. aus dem Öffnungsbereich Herausförderns angepaßt sind.

Ferner wird vorgeschlagen, daß die Walzen mit gleicher Drehzahl rotiert werden. So kann ein besonders einfacher Antrieb der Walzen erreicht werden. Daneben können die Walzen jedoch auch mit unterschiedlicher Drehzahl rotieren.

Darüber hinaus wird vorgeschlagen, daß die Münzen zum Walzenpaar gefördert werden. Das Walzenpaar kann somit vorteilhaft an einer nicht zugänglichen Stelle angeordnet sein, so daß es vor einem unauthorisierten Zugriff geschützt ist.

In einer weiteren Ausgestaltung wird vorgeschlagen, daß das Walzenpaar in Abhängigkeit von einer Münzzuführung rotiert wird. So kann beispielsweise vorgesehen sein, daß das Walzenpaar nur dann rotiert wird, solange Münzen zum Walzenpaar gefördert werden. Energie kann eingespart und Verschleiß kann reduziert werden.

Darüber hinaus wird vorgeschlagen, daß die Münzen in einem Behältnis gesammelt werden. Vorteilhaft können Münzen in einen sicheren Bereich geführt werden, in dem sie vor unberechtigtem Zugriff geschützt sind.

Gemäß einem weiteren Aspekt der vorliegenden Erfindung wird vorgeschlagen, daß die Münzen seriell von dem Walzenpaar zu einer Weiterverarbeitungseinrichtung gefördert werden. Vorteilhaft können die Münzen bedarfsgerecht der Weiterverarbeitungseinrichtung zugeführt werden, die beispielsweise für eine serielle Authentifizierung der Münzen vorgesehen ist.

In einer weiteren Ausgestaltung wird vorgeschlagen, daß die Münzen mittels eines Bypasses an der Weiterverarbeitungseinrichtung vorbeigeführt werden. So kann beispielsweise bei einer Störung der Weiterverarbeitungseinrichtung erreicht werden, daß die Münzen nicht zu einem Münzstau innerhalb der Vorrichtung führen. Die Münzen können beispielsweise wieder einer Ausgabeeinheit zugeführt werden.

Gemäß einem weiteren Aspekt der vorliegenden Erfindung wird vorgeschlagen, daß die Münzen über einen mit einem Münzeinwurfschlitz verbundenen Bypaß an dem Walzenpaar vorbeigeführt werden. Vorteilhaft kann bei einer Störung des Walzenpaars erreicht werden, daß trotzdem Münzen zuführbar sind.

Mit der Erfindung wird ferner eine Vorrichtung zur Annahme von Münzen bei automatischen Zahlungstransaktionen vorgeschlagen, die ein Walzenpaar, dessen Walzen gleichläufig rotierbar sind, und ein Transportmittel, mittels dem die Münzen zur Vereinzelung dem Walzenpaar zuführbar sind, aufweist. Es ist mit der vorliegenden Erfindung möglich, Münzen zur Ausführung einer Zahlungstransaktion über den zu zahlenden Betrag der Vorrichtung gleichzeitig zuzuführen. Die umständliche Bedienung durch Einführen einzelner Münzen in einen entsprechend dafür vorgesehenen Öffnungsschlitz kann vermieden werden. Darüber hinaus kann erreicht werden, daß die Eingabe und die Authentifizierung von Münzen beschleunigt wird. Insgesamt kann eine Beschleunigung des Zahlungsvorgangs erreicht werden. Das Transportmittel ist durch eine schiefe Ebene gebildet, die als Endtrichter oder auch als eine schräge Auflagefläche ausgebildet sein kann, auf der die Münzen in Richtung Walzenpaar auf Grund ihres Gewichts rutschen. Es kann jedoch auch vorgesehen sein, daß die Münzen über ein Förderband zur schiefen Ebene gefördert werden, von der sie dann zum Walzenpaar gelangen. Der Bereich der schiefen Ebene ist dabei vorteilhaft so groß ausgestaltet, daß er zur Aufnahme der größtmöglichen Münzenzahl vorgesehen ist. Darüber hinaus können die Walzen unterschiedliche Durchmesser und Oberflächeneigenschaften aufweisen, die beispielsweise an die vorgesehene Funktion des in den Schlitz Hineinziehens bzw. aus dem Öffnungsbereich Herausfördems angepaßt sind.

Es wird ferner vorgeschlagen, daß der Abstand zwischen den Walzen größer als die Stärke einer Münze und kleiner als die Stärke von zwei Münzen ist. Auf diese Weise kann vorteilhaft verhindert werden, daß zwei Münzen gleichzeitig die Öffnung zwischen den Walzen passieren und in die nachfolgenden Funktionsbereiche gelangen. Sobald zwei Münzen benachbart zueinander an den Walzen anliegen, wird die eine Münze von einer Walze in den Öffnungsbereich hineingezogen, während die gegenüberliegende Münze aus dem Öffnungsbereich durch die gegenüberliegende Walze entgegen der Durchflußrichtung herausgefördert wird. Eine sichere Vereinzelung der Münzen kann erreicht werden.

Es ist ein Aspekt der Erfindung, daß die Vorrichtung eine Weiterverarbeitungseinrichtung aufweisen kann. Die Weiterverarbeitungseinrichtung kann beispielsweise durch einen Münzprüfer gebildet sein, der die Münzen authentifiziert und als gültiges oder ungültiges Zahlungsmittel kennzeichnet. Die Weiterverarbeitungseinrichtung kann auch eine Recheneinheit umfassen, mit der der Betrag der authentifizierten Münzen als Summe festgestellt wird. Die Weiterverarbeitungseinrichtung kann ferner andere oder weitere Aufgaben umfassen.

Die Vorrichtung kann einen Bypass zur Umgehung der Weiterverarbeitungseinrichtung aufweisen. Mit dem Bypass kann gewährleistet werden, daß die Münzen bei einer Störung der Weiterverarbeitungseinrichtung an dieser vorbeigeleitet werden und beispielsweise einer Münzausgabeeinrichtung oder auch einem weiteren Behältnis zugeführt werden. So kann vermieden werden, daß die Weiterverarbeitungseinrichtung durch Eingabe immer weiterer Münzen vor einer weiteren Beschädigung geschützt ist.

Die Vorrichtung kann eine Münzeingabe aufweisen, die verschließbar ist. Es kann erreicht werden, daß im Störungsfall keine weiteren Münzen oder auch nicht bestimmungsgemäße Gegenstände dem Eingabebereich der Vorrichtung zugeführt werden können. Zusätzliche Beschädigungen können auf diese Weise vermieden werden. Es kann aber auch vorgesehen sein, daß der Öffnungsbereich verschlossen wird, wenn eine Störung der Vorrichtung insgesamt vorliegt. Der Verschlußmechanismus kann rechnergesteuert sein.

Darüber hinaus kann die Münzeingabe trichterförmig ausgebildet sein. Mit der trichterförmigen Ausgestaltung kann vorteilhaft eine einfache Zuführung der Münzen zum Walzenpaar erreicht werden. Aufgrund der Gewichtskraft gleiten die Münzen in den Bereich des Walzenpaars. Bei geringen Steigungen in der Trichterform können jedoch auch Fördermittel wie Transportbänder und dergleichen vorgesehen sein.

Gemäß einem Aspekt der Erfindung kann die Münzeingabe einen Bereich zur Einzeleingabe von Münzen aufweisen. Es kann vorteilhaft erreicht werden, daß auch im Falle einer Störung der Eingabe über das Walzenpaar eine Einzeleingabe von Münzen möglich ist, so daß ein Betrieb auch im Falle einer Störung der Münzannahme über das Walzenpaar gewährleistet werden kann. Der Bereich zur Einzeleingabe von Münzen kann dazu beispielsweise verschließbar sein, wobei der Verschluß durch eine Rechnereinheit gesteuert wird.

Es wird ferner vorgeschlagen, daß der Bereich zur Einzeleingabe von Münzen sperrbar und/oder freigebbar ist. So kann der Bereich zur Einzeleingabe von Münzen erst dann freigegeben werden, wenn über eine Selbstdiagnose der Vorrichtung eine Störung der Annahme von Münzen über das Walzenpaar festgestellt worden ist. Nach Behebung der Störung kann der Bereich zur Einzeleingabe von Münzen automatisch wieder gesperrt werden. Es kann aber auch vorgesehen sein, daß eine manuelle Sperrung und/oder Freigabe vorgesehen ist.

Darüber hinaus wird vorgeschlagen, daß die Vorrichtung einen Sensor zur Erkennung eines Münzeinwurfs aufweisen kann. So kann vorteilhaft das Walzenpaar im Stand-by energiesparend ohne Antrieb sein, wobei das Walzenpaar erst dann angetrieben wird, wenn ein Münzeinwurf erkannt worden ist. Der Münzeinwurf kann beispielsweise durch einen Gewichtssensor oder auch durch einen Sensor elektrischer bzw. magnetischer Felder gebildet sein. Auch ein optischer Sensor kann vorgesehen sein um einen Münzeinwurf zu erkennen. Sobald ein Münzeinwurf erkannt wurde, wird das entsprechende Walzenpaar in Betrieb gesetzt.

Weiterhin wird vorgeschlagen, daß der Bereich zur Einzelangabe von Münzen mit einem Bypaß zur Umgehung des Walzenpaars verbunden ist. So kann im Falle einer Störung der Zuführung von Münzen mittels Walzenpaar erreicht werden, daß trotz dieser Störung Münzen zuführbar sind. Vorteilhaft ist die Funktion der Vorrichtung unabhängig von der Funktion des Walzenpaars.

Zwischen dem Walzenpaar und der Weiterverarbeitungseinrichtung können Transportmittel angeordnet sein. Die Transportmittel können beispielsweise durch eine weitere schiefe Ebene aber auch durch Transportbänder oder Röhren gebildet sein. Die vereinzelten Münzen können so vorteilhaft der Weiterverarbeitungseinrichtung zugeführt werden, so daß diese die Münzen selektiv authentifizieren kann.

Darüber hinaus wird vorgeschlagen, daß das Transportmittel eine schiefe Ebene ist. Die schiefe Ebene kann dabei vorteilhaft derart ausgestaltet sein, daß die Münzen weiterhin für die weitere Verarbeitung vereinzelt bleiben.

Um eine Störung im Bereich des Transportmittels beheben zu können, wird vorgeschlagen, daß im Bereich des Transportmittels eine entfernbare und/oder schwenkbare Abdeckung angeordnet sein kann. Vorteilhaft kann erreicht werden, daß mittels der Abdeckung ein Eindringen von Fremdkörpern oder unerwünschten Teilen in die Weiterverarbeitungseinrichtung verhindert wird.

Es wird ferner vorgeschlagen, daß im Bereich des Transportmittels Sensormittel zur Erfassung von Fremdkörpern angeordnet sind. Diese Sensormittel können über eine Rechnereinheit mit einem Antrieb der Abdeckung des Transportmittels verbunden sein, so daß die Abdeckung zur Aussortierung von unerwünschten Fremdkörpern angesteuert und betätigt werden kann.

Vorteilhaft können Fremdkörper oder auch defekte Münzen oder auch ungültige Münzen erkannt werden, bevor größere Schaden an der Vorrichtung entstanden ist. Durch Sperren der Münzeingabe sowie auch dem Bereich zur Einzeleingabe von Münzen kann der Automat vor einer Beschädigung in einem größeren Umfang geschützt werden.

Im Rahmen der vorliegenden Erfindung können auch einzelne Merkmale zu weiteren Ausgestaltungen kombiniert werden.

Weitere Vorteile und Merkmale sind der folgenden Beschreibung eines Ausführungsbeispiels mit Bezug auf die zugehörige Zeichnung zu entnehmen. Die Zeichnung ist eine Schemazeichnung und dient nur der Erläuterung des folgenden Ausführungsbeispiels und ist nicht beschränkend.

Die einzige Figur zeigt eine schematische Darstellung einer Ausführungsform einer Vorrichtung zur Annahme von Münzen.

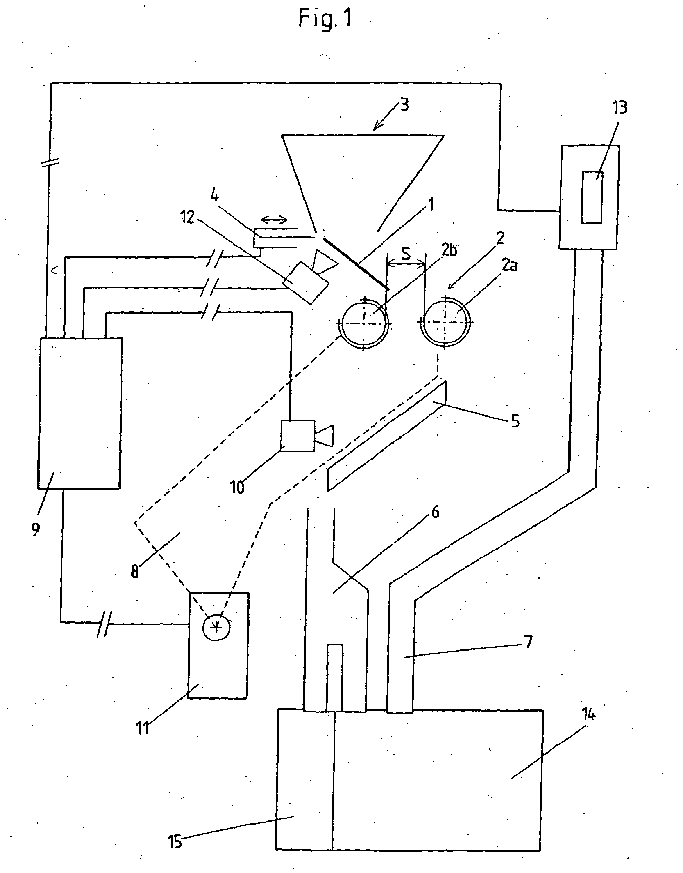

In Fig. 1 erkennt man eine schiefe Ebene 1 zur Zuführung von zu vereinzelnden Münzen zu einem Walzenpaar, dessen Walzen 2a, 2b gleichläufig, z. B. beide im Uhrzeigersinn, rotieren. Die schiefe Ebene 1 ist im dargestellten Ausführungsbeispiel Teil eines Aufnahmetrichters 3, in welchem die Münzen vorteilhaft ungeordnet und in beliebiger Anzahl eingeworfen werden können. Der Trichter 3 ist im Bodenbereich mit Hilfe einer Klappe 4 verschließbar.

Bei geöffneter Klappe 4 gelangen die eingeworfenen Münzen über die schiefe Ebene 1 zum Walzenpaar 2, dessen Walzen 2a, 2b voneinander beabstandet angeordnet sind. Der zwischen den Walzen 2a, 2b befindliche Abstand weist das mit s gekennzeichnete Maß auf. Dieses Maß s ist größer als die Stärke der stärksten Münze, jedoch kleiner als die doppelte Stärke der kleinsten Münze.

Durch diese Wahl des Abstandes s zwischen den Walzen 2a, 2b wird gewährleistet, daß jeweils nur eine Münze, unabhängig von ihrem Wert, den Spalt zwischen den Walzen 2a, 2b passieren kann. Durch den gleichläufigen Drehsinn der Walzen 2a, 2b wird erreicht, daß die Walze 2b die Münzen in den Spalt s fördert, während die Walze 2a aufgrund ihrer der Durchflußrichtung der Münzen durch den Spalt entgegengesetzten Umfangsgeschwindigkeit am Spalt s die Münzen aus diesem herausfördert. In dem Fall, daß zwei oder mehr Münzen gleichzeitig am Spalt s angelangen, wird nur die mit der Walze 2b in Kontakt tretende Münze durch den Spalt s hindurchgefördert, während die die Walze 2a berührende Münze von dieser aus dem Spalt heraus zurückgeworfen wird und erst nachfolgend den Spalt passieren kann. Nach Passieren des Walzenpaares 2 gelangen die Münzen zu einer weiteren schiefen Ebene 5, über die sie zur weiteren Verarbeitung beispielsweise zu einem Münzprüfer 6 geleitet werden. Für den Fall, daß am Münzprüfer 6 eine Störung vorliegt, ist ein Bypass 7 zur Umgehung des Münzprüfers 6 vorgesehen. Um ein Eindringen von Fremdkörpern in den Münzprüfer 6 zu verhindern, ist oberhalb der schiefen Ebene 5 eine beispielsweise perforierte Klappe 8 angeordnet, welche über eine Steuerung 9 zu öffnen oder zu schließen ist. Ein Sensor 10, der in der Lage ist eingeworfene Münzen von unerwünschten Fremdkörpern zu unterscheiden und der ebenfalls mit der Steuerung 9 verbunden ist, wird bei Vorliegen von Fremdkörpern im Bereich der schiefen Ebene 5 ein Steuersignal an die Steuerung 9 geleitet, in dieser verarbeitet und ein Signal zum Öffnen oder Schließen der Klappe 8 an den Antrieb 11 der Klappe 8 weitergeleitet. Die Steuerung 9 ist mit einem weiteren Sensor 12 verbunden, der im Bereich der schiefen Ebene 1 des Trichters 3 angeordnet ist und in der Lage ist, einen Münzeinwurf zu registrieren und ein Signal an die Steuerung 9 weiterzuleiten. Die Verriegelung 4 der schiefen Ebene 1 ist ebenfalls über die Steuerung 9 zu verschließen und zu öffnen. Bei geschlossener Klappe 4 leitet die Steuerung 9 ein Signal an einen Münzeinwurfschlitz 13. Dieser Münzeinwurfschlitz 13 ist bei geöffneter Klappe 4 geschlossen, wird durch das Signal der Steuerung 9 bei geschlossener Klappe 4 jedoch geöffnet. Auf diese Weise kann bei einer Störung im Bereich der Vereinzelung der Münzen dennoch die Annahme von Münzen weiterhin gewährleistet werden. Die in die Vorrichtung eingeworfenen Münzen werden nach einer Prüfung in dem Münzprüfer 6 entweder in einem Behältnis 14 gesammelt oder, im Falle von ungültigen Münzen, einer Münzausgabeeinheit 15 zugeführt.

Die Figurenbeschreibung dient ausschließlich der Erläuterung der vorliegenden Erfindung und ist für diese nicht beschränkend.

### Bezugszeichenliste

- 1: Schiefe Ebene
- 2: Walzen
- 2a: Walzen
- 2b: Walzen
- 3: Trichter
- 4: Klappe
- 5: Schiefe Ebene
- 6: Münzprüfer
- 7: Bypass
- 8: Klappe
- 9: Steuerung
- 10: Sensor
- 11: Antrieb
- 12: Sensor
- 13: Münzeinwurfsschlitz
- 14: Behältnis
- 15: Münzausgabeeinheit
- S: Spalt

## Patentansprüche

1. Verfahren zur Annahme von Münzen bei automatischen Zahlungstransaktionen, wobei die Münzen zur Vereinzelung wenigstens einem Walzenpaar (2) mit zwei parallel angeordneten, in gleichläufigem Drehsinn rotierenden, Walzen (2a, 2b) mittels einer schiefen Ebene (1) zugeführt werden, wobei eine eine erste Walze (2b) kontaktierende Münze durch einen durch das Walzenpaar (2) gebildeten Spalt (s) hindurchgefördert wird und wobei eine eine zweite Walze (2a) berührende Münze von dieser aus dem Spalt (s) heraus zurückgeworfen wird.

2. Verfahren nach Anspruch 1, **dadurch gekennzeichnet, daß** die Walzen (2) mit gleicher Drehzahl rotiert werden.

3. Verfahren nach Anspruch 1 oder 2, **dadurch gekennzeichnet, daß** die Münzen zum Walzenpaar (2) gefördert werden.

4. Verfahren nach einem der Ansprüche 1 bis 3, **dadurch gekennzeichnet, daß** das Walzenpaar (2) in Abhängigkeit von einer Münzzuführung rotiert wird.

5. Verfahren nach einem der Ansprüche 1 bis 4, **dadurch gekennzeichnet, daß** die Münzen in einem Behältnis (14) gesammelt werden.

6. Verfahren nach einem der Ansprüche 1 bis 5, **dadurch gekennzeichnet, daß** die Münzen seriell von dem Walzenpaar (2) zu einer Weiterverarbeitungseinrichtung (6) gefördert werden.

7. Verfahren nach einem der Ansprüche 1 bis 6, **dadurch gekennzeichnet, daß** die Münzen mittels eines Bypasses (7) an der Weiterverarbeitungseinrichtung (6) vorbeigeführt werden.

8. Verfahren nach einem der Ansprüche 1 bis 7, **dadurch gekennzeichnet, daß** die Münzen über einen mit einem Münzeinwurfschlitz (13) verbundenen Bypaß (7) an dem Walzenpaar (2) vorbeigeführt werden.

9. Vorrichtung zur Annahme von Münzen bei automatischen Zahlungstransaktionen,
**gekennzeichnet durch**
ein einen Spalt (s) bildendes Walzenpaar (2) mit zwei parallel angeordneten Walzen (2a, 2b), die in gleichläufigem Drehsinn rotierbar sind und mit denen die Münzen in Kontakt treten können sowie eine schiefe Ebene (1), mittels der die Münzen zur Vereinzelung dem Walzenpaar (2) zuführbar sind.

10. Vorrichtung nach Anspruch 9, **dadurch gekennzeichnet, daß** der Abstand (s) zwischen den Walzen (2a, 2b) größer als die Stärke einer Münze und kleiner als die Stärke von zwei Münzen ist.

11. Vorrichtung nach Anspruch 9 oder 10, **gekennzeichnet durch** eine Weiterverarbeitungseinrichtung (6).

12. Vorrichtung nach einem der Ansprüche 9 bis 11, **gekennzeichnet durch** einen Bypaß (7) zur Umgehung der Weiterverarbeitungseinrichtung (6).

13. Vorrichtung nach einem der Ansprüche 9 bis 12, **gekennzeichnet durch** eine Münzeingabe (4), die verschließbar ist.

14. Vorrichtung nach einem der Ansprüche 9 bis 13, **dadurch gekennzeichnet, daß** die Münzeingabe (4) trichterförmig ausgebildet ist.

15. Vorrichtung nach einem der Ansprüche 9 bis 14, **dadurch gekennzeichnet, daß** die Münzeingabe (4) einen Bereich zur Einzeleingabe (13) von Münzen aufweist.

16. Vorrichtung nach einem der Ansprüche 9 bis 15, **dadurch gekennzeichnet, daß** der Bereich zur Einzeleingabe (13) von Münzen sperrbar und/oder freigebbar ist.

17. Vorrichtung nach einem der Ansprüche 9 bis 16, **dadurch gekennzeichnet, daß** der Bereich zur Einzeleingabe (13) von Münzen mit einem Bypaß zur Umgehung des Walzenpaars (2) verbunden ist.

18. Vorrichtung nach einem der Ansprüche 9 bis 17, **gekennzeichnet durch** einen Sensor (10) zur Erkennung eines Münzeinwurfs.

19. Vorrichtung nach einem der Ansprüche 9 bis 18, **dadurch gekennzeichnet, daß** zwischen dem Walzenpaar (2) und der Weiterverarbeitungseinrichtung (6) Transportmittel (5) angeordnet sind.

20. Vorrichtung nach einem der Ansprüche 9 bis 19, **dadurch gekennzeichnet, daß** das Transportmittel (5) eine schiefe Ebene ist.

21. Vorrichtung nach einem der Ansprüche 9 bis 20, **dadurch gekennzeichnet, daß** im Bereich des Transportmittels (5) eine entfembare und/oder schwenkbare Abdeckung (8) angeordnet ist.

22. Vorrichtung nach einem der 9 bis 21, **dadurch gekennzeichnet, daß** im Bereich des Transportmittels (5) Sensormittel (12) zur Erfassung von Fremdkörpern angeordnet sind.

## Claims

1. Method of accepting coins in automatic payment transactions, wherein for separation the coins are delivered by means of an inclined plane (1) to at least one pair of rollers (2) which are disposed parallel and rotate in the same direction, wherein a coin contacting a first roller (2b) is conveyed through a gap (s) formed by the pair of rollers (2) and wherein a coin contacting a second roller (2a) is thrown back out of the gap (s) by the roller.

2. Method as claimed in Claim 1, **characterised in that** the rollers (2) are rotated at the same rotational speed.

3. Method as claimed in Claim 1 or 2, **characterised in that** the coins are conveyed to the pair of rollers (2).

4. Method as claimed in any one of Claims 1 to 3, **characterised in that** the pair of rollers (2) is rotated as a function of delivery of a coin.

5. Method as claimed in any one of Claims 1 to 4, **characterised in that** the coins are collected in a container (14).

6. Method as claimed in any one of Claims 1 to 5, **characterised in that** the coins are conveyed in series from the pair of rollers (2) to a further processing device (6).

7. Method as claimed in any one of Claims 1 to 6, **characterised in that** the coins are guided past the further processing device (6) by means of a bypass (7).

8. Method as claimed in any one of Claims 1 to 7, **characterised in that** the coins are guided past the further processing device (6) by way of a bypass (7) connected to a coin insertion slot (13).

9. Apparatus for accepting coins in automatic payment transactions, **characterised by** a pair of rollers (2) which form a gap (s) with rollers (2a, 2b) which are disposed parallel and are rotatable in the same direction and with which the coins can come into contact as well as an inclined plane (1) by means of which the coins can be delivered to the pair of rollers (2) for separation.

10. Apparatus as claimed in Claim 9, **characterised in that** the distance (s) between the rollers (2a, 2b) is greater than the thickness of one coin and smaller than a thickness of two coins.

11. Apparatus as claimed in Claim 9 or 10, **characterised by** a further processing device (6).

12. Apparatus as claimed in any one of Claims 9 to 11, **characterised by** a bypass (7) for circumventing the further processing device (6).

13. Apparatus as claimed in any one of Claims 9 to 12, **characterised by** a coin inlet (4) which can be closed.

14. Apparatus as claimed in any one of Claims 9 to 13, **characterised in that** the coin inlet (4) is constructed in the form of a funnel.

15. Apparatus as claimed in any one of Claims 9 to 14, **characterised in that** the coin inlet (4) has an area for individual insertion (13) of coins.

16. Apparatus as claimed in any one of Claims 9 to 15, **characterised in that** the area for individual insertion (13) of coins can be closed off and/or cleared.

17. Apparatus as claimed in any one of Claims 9 to 16, **characterised in that** the area for individual insertion (13) of coins is connected with a bypass for circumventing the pair of rollers (2).

18. Apparatus as claimed in any one of Claims 9 to 17, **characterised by** a sensor (10) for recognition of the insertion of a coin.

19. Apparatus as claimed in any one of Claims 9 to 18, **characterised in that** transport means (5) are disposed between the pair of rollers (2) and the further processing device (6).

20. Apparatus as claimed in any one of Claims 9 to 19, **characterised in that** the transport means (5) is an inclined plane.

21. Apparatus as claimed in any one of Claims 9 to 20, **characterised in that** a removable and/or pivotable cover (8) is disposed in the region of the transport means (5).

22. Apparatus as claimed in any one of Claims 9 to 21, **characterised in that** sensor means (12) for the detection of foreign bodies are disposed in the region of the transport means (5).

## Revendications

1. Méthode pour l'acceptation de pièces de monnaie lors de transactions de paiement automatiques, dans laquelle les pièces de monnaie sont amenées au moyen d'un plan incliné (1), en vue de leur séparation, à une paire de rouleaux (2) comprenant deux rouleaux (2a, 2b) parallèles tournant dans le même sens, dans laquelle une pièce de monnaie entrant en contact avec un premier rouleau (2b) est acheminée à travers un interstice (s) formé par la paire de rouleaux (2) et une pièce de monnaie venant en contact avec un deuxième rouleau (2a) est rejetée par celui-ci hors de l'interstice (s).

2. Méthode selon la revendication 1, **caractérisée en ce que** les rouleaux (2) sont entraînés en rotation à la même vitesse.

3. Méthode selon la revendication 1 ou 2, **caractérisée en ce que** les pièces de monnaie sont transportées vers la paire de rouleaux (2).

4. Méthode selon l'une quelconque des revendications 1 à 3, **caractérisée en ce que** la paire de rouleaux (2) est entraînée en rotation en fonction de l'amenée de pièces de monnaie.

5. Méthode selon l'une quelconque des revendications 1 à 4, **caractérisée en ce que** les pièces de monnaie sont collectées dans un réceptacle (14).

6. Méthode selon l'une quelconque des revendications 1 à 5, **caractérisée en ce que** les pièces de monnaie sont transportées successivement à la paire de rouleaux (2) puis à une installation de traitement (6).

7. Méthode selon l'une quelconque des revendications 1 à 6, **caractérisée en ce que** les pièces de monnaie sont transportées en contournant l'installation de traitement (6) au moyen d'une dérivation (7).

8. Méthode selon l'une quelconque des revendications 1 à 7, **caractérisée en ce que** les pièces de monnaie sont transportées en contournant la paire de rouleaux (2) par une dérivation (7) reliée à une fente d'introduction des pièces (13).

9. Dispositif pour l'acceptation de pièces de monnaie lors de transactions de paiement automatiques, **caractérisé en ce qu'**il comporte une paire de rouleaux (2) formant un interstice (s) avec deux rouleaux (2a, 2b) parallèles qui peuvent être entraînés en rotation dans le même sens et avec lesquels les pièces de monnaie peuvent venir en contact, ainsi qu'un plan incliné (1), au moyen duquel les pièces de monnaie peuvent être amenées, en vue de leur séparation, à la paire de rouleaux (2).

10. Dispositif selon la revendication 9, **caractérisé en ce que** l'écartement (s) entre les rouleaux (2a, 2b) est plus grand que l'épaisseur d'une pièce de monnaie et plus petit que l'épaisseur de deux pièces de monnaie.

11. Dispositif selon la revendication 9 ou 10, **caractérisé en ce qu'**il comporte une installation de traitement (6).

12. Dispositif selon l'une quelconque des revendications 9 à 11, **caractérisé en ce qu'**il comporte une dérivation (7) destinée à contourner l'installation de traitement (6).

13. Dispositif selon l'une quelconque des revendications 9 à 12, **caractérisé en ce qu'**il comporte une entrée de pièces (4) qui peut être fermée.

14. Dispositif selon l'une quelconque des revendications 9 à 13, **caractérisé en ce que** l'entrée de pièces (4) est en forme d'entonnoir.

15. Dispositif selon l'une quelconque des revendications 9 à 14, **caractérisé en ce que** l'entrée de pièces (4) possède une zone d'insertion à l'unité (13) pour les pièces de monnaie.

16. Dispositif selon l'une quelconque des revendications 9 à 15, **caractérisé en ce que** la zone d'insertion à l'unité (13) pour les pièces de monnaie peut être bloquée et/ou dégagée.

17. Dispositif selon l'une quelconque des revendications 9 à 16, **caractérisé en ce que** la zone d'insertion à l'unité (13) des pièces de monnaie est reliée à une dérivation destinée à contourner la paire de rouleaux (2).

18. Dispositif selon l'une quelconque des revendications 9 à 17, **caractérisé en ce qu'**il comporte un capteur (10) destiné à détecter l'insertion d'une pièce de monnaie.

19. Dispositif selon l'une quelconque des revendications 9 à 18, **caractérisé en ce que** des moyens de transport (5) sont disposés entre la paire de rouleaux (2) et l'installation de traitement (6).

20. Dispositif selon l'une quelconque des revendications 9 à 19, **caractérisé en ce que** le moyen de transport (5) est un plan incliné.

21. Dispositif selon l'une quelconque des revendications 9 à 20, **caractérisé en ce qu'**il est prévu au niveau du moyen de transport (5) un couvercle (8) amovible et/ou pivotante.

22. Dispositif selon l'une quelconque des revendications 9 à 21, **caractérisé en ce qu'**il est prévu au niveau du moyen de transport (5) des capteurs (12) destinés à détecter des corps étrangers.
